# EUROPÄISCHE PATENTSCHRIFT

(11) **EP 1 177 059 B1**
(45) Veröffentlichungstag und Bekanntmachung des Hinweises auf die Patenterteilung: **11.02.2004**
(21) Anmeldenummer: 00938539.4
(22) Anmeldetag: 11.05.2000
(51) Int. Cl.: B23B 5/16

(54) **MULTIFUNKTIONALE VORRICHTUNGEN ZUR BEARBEITUNG DES ENDBEREICHS VON WERKSTÜCKEN DURCH DREHEN MIT MINDESTENS EINEM UMLAUFENDEN WERKZEUG UND STEHENDEM WERKSTÜCK**
MULTIFUNCTIONAL DEVICES FOR MACHINING THE END SECTIONS OF WORK PIECES BY TURNING ON A LATHE WITH A STATIONARY WORK PIECE AND AT LEAST ONE REVOLVING TOOL
DISPOSITIFS MULTIFONCTIONNELS POUR USINER DES ZONES D'EXTREMITE DE PIECES PAR TOURNAGE AU MOYEN D'AU MOINS UN OUTIL ROTATIF ET D'UNE PIECE FIXE

(30) Priorität: 12.05.1999 DE 19921919
(43) Veröffentlichungstag der Anmeldung: 06.02.2002
(73) Patentinhaber: ERMAFA Sondermaschinen- und Anlagenbau GmbH, 09117 Chemnitz (DE)
(72) Erfinder: WALLICH, Erich, D-09648 Mittweida (DE); TROMMLER, Werner, D-09130 Chemnitz (DE)
(74) Vertreter: Krause, Wolfgang, Dr.-Ing., Dipl.-Ing.
(86) Internationale Anmeldenummer: PCT/DE2000/001474
(87) Internationale Veröffentlichungsnummer: WO 2000/069589

(56) Entgegenhaltungen:
- US-A- 4 411 178

## Beschreibung

Die Erfindung betrifft multifunktionale Vorrichtungen zur Bearbeitung des Endbereichs von Werkstücken durch Drehen mit mindestens einem umlaufenden Werkzeug und stehendem Werkstück.

Das Bearbeiten von radial feststehenden Werkstücken mit drehenden Werkzeugen ist aus mehreren Lösungen bekannt. Bearbeitungsköpfe sind unter anderem in der DE 29 52 752 (Drehkopf, insbesondere Plandrehkopf), DE 34 40 398 (Umlaufender Bearbeitungskopf) und DE 39 22 751 (Außenbearbeitungskopf) aufgeführt. Eine Bewegung der Werkzeuge gegenüber dem Werkstück wird vorausgesetzt, nicht näher beschrieben oder erfolgt mittels translatorischen Stellantrieben.

In der DE 32 37 587 (Vorrichtung zur Herstellung von Gewindeanschlüssen an Großrohren) erfolgt die Bewegung der Werkzeuge über eine sich mitdrehende und verschiebbar angeordnete doppelseitig verzahnte Antriebsstange. Über daran angekoppelte Stirnzahnräder, die gleichzeitig in an Werkzeugböcken angeordnete Zahnstangen eingreifen, erfolgt die Bewegung der Werkzeugböcke. Mit einer derartigen Realisierung sind die Werkzeugböcke nur gleichzeitig bewegbar. Eine voneinander unabhängige Bewegung ist nicht möglich.

Die DE 33 41 479 (Vorrichtung zum Plandrehen) beinhaltet eine Vorrichtung mit einem Drehkopf einschließlich mehrerer Werkzeuge, die gegenüber dem Werkstück verfahren werden können. Die Bewegung der Werkzeuge zum Werkstück hin oder von diesem weg erfolgt über eine Schaltkupplung. Weiterhin sind die Bewegungen der Arbeitswelle und die der Werkzeugschlitten direkt miteinander verkoppelt, so dass eine unabhängige Bewegung der Werkzeugschlitten nicht möglich ist. Nächstliegender Stand der Technik ist die US-A-44 11 178 (Rohrendenbearbeitungsmaschine) (siehe Oberbegiff des Anspruchs 1). Die Bearbeitung des Rohrendes erfolgt mit umlaufenden Werkzeugen auf einem Werkzeugträger und stehendem Rohr. Die Werkzeuge können gegenüber dem Werkstück bei rotierendem Werkzeugträger verfahren werden. Dazu wird ein Antrieb für die Werkzeuge bedarfsweise über eine Kupplung zugeschaltet, so dass über einen unabhängig drehbaren Zahnkranz und ein damit verkoppeltes Schneckengetriebe eine Bewegung der Werkzeuge in Richtung zur Mitte des Werkzeugträgers oder von dieser weg möglich ist.

Der im Patentanspruch 1 angegebenen Erfindung liegt das Problem zugrunde, insbesondere die Enden von Rohren vorzugsweise Großrohren oder ähnlich gestalteten Werkstücken zu trennen, plan zu drehen und/oder mit einem Gewinde zu versehen.

Dieses Problem wird mit den im Patentanspruch 1 aufgeführten Merkmalen gelöst.

Die multifunktionale Vorrichtung zur Bearbeitung des Endbereichs von Werkstücken durch Drehen mit mindestens einem umlaufenden Werkzeug und stehendem Werkstück zeichnet sich insbesondere dadurch aus, dass ein Werkzeug oder mehrere Werkzeuge auf einem Werkzeugträger während des Umlaufes und sowohl unabhängig davon als unabhängig voneinander gegenüber dem Werkstück verfahren werden können. Gleichzeitig ist die Bewegung des Werkzeugs gegenüber dem Werkstück auch zu stoppen.

Ein weiterer besonderer Vorteil besteht darin, dass die Bewegungen sowohl des Werkzeugträgers als auch des Werkzeugs bei verkoppelten Getriebe unabhängig voneinander erfolgt. Ein Schalten ist nicht notwendig. Damit erfolgt eine kontinuierliche Bearbeitung des Werkstückes. Fehlzeiten, Bewegungsunterbrechungen oder Bewegungen mit unkontrollierten Beschleunigungen hervorgerufen durch das Schalten treten nicht auf. Die Bewegungen sind synchron. Die Einstellung, Steuerung und/oder Regelung der Bearbeitungstechnologie wird wesentlich vereinfacht. Weiterhin werden dadurch hervorgerufene Herstellungsfehler vermieden.

Die erfindungsgemäße Vorrichtung ist weiterhin so ausgestaltet, dass ein modularer Aufbau vorhanden ist. Die einzelnen Module sind dabei
- die Voll- oder Hohlwelle, mindestens einer darin plazierten Schlittenantriebswelle, wenigstens einem Getriebe und der Antriebe und
- dem Werkzeugträger mit den oder mehreren Schlitten.

Der Einsatz einer Hohlwelle mit einem kreisringförmigen Werkzeugträger führt dazu, dass das Werkstück vor oder nach einer Bearbeitung durch diese Hohlwelle geführt werden kann. Damit ergeben sich die unterschiedlichsten Anwendungsfälle. Unter anderem ist nur eine Bewegungsrichtung für das Werkstück notwendig, so dass nur einfache Handhabungstechniken für den Werkstücktransport notwendig sind. Weiterhin ist eine kontinuierlich arbeitende Fertigungslinie realisierbar. Beide Enden des Werkstücks sind ohne Wenden bearbeitbar. Der Platzbedarf reduziert sich auf ein Minimum. Dieser Sachverhalt ist besonders bei sehr langen Werkstücken von besonderer Bedeutung.

Die Realisierung des Getriebes als Planetenradgetriebe, wobei der Steg über ein innen und außen verzahntes Stirnrad mit der Schlittenantriebswelle in der Voll- oder Hohlwelle verbunden ist, stellt die einfachste Möglichkeit einer Überlagerung von zwei Bewegungen dar. Die erste Bewegung ist die Rotation der Voll- oder Hohlwelle und die zweite die Rotation der Schlittenantriebswelle. Mit einer derartigen Anordnung ist die Schlittenantriebswelle unabhängig der Bewegung der Voll- oder Hohlwelle bewegbar. Gleichzeitig ist das Getriebe sehr schmal, so dass durch eine Ergänzung weiterer derartiger Getriebeteile leicht mehrere Schlittenantriebswellen unabhängig voneinander von außen antreibbar sind und wobei ein minimalster Platzbedarf gegeben ist.

Zwei multifunktionale Vorrichtungen zur Bearbeitung des Endbereichs von Werkstücken durch Drehen mit mindestens einem umlaufenden Werkzeug und stehendem Werkstück, die so zueinander angeordnet sind, dass sich die Werkzeugträger gegenüberstehen und sich dazwischen das Werkstück befindet, sind vorteilhafterweise unter anderem zur Bearbeitung der beiden Enden von insbesondere lösbaren Rohrverbindungsstücken in Form von Gewindemuffen geeignet. Damit ist eine sehr ökonomische Fertigung derartiger Werkstücke vorhanden. Eine der erfindungsgemäßen Vorrichtungen ist dabei gegenüber der anderen verfahrbar angeordnet, so dass leicht auch Werkstücke unterschiedlicher Länge bearbeitbar sind.

Die Werkzeugträger sind dabei kreisförmig mit mindestens einem Schlitten als Träger eines lösbaren Werkzeuges. Die Schlitten sind bis in Nähe des Mittelpunktes verfahrbar, so dass insbesondere auch Innenbearbeitungen kleinerer Werkstücke möglich sind. Die Nähe zum Mittelpunkt wird durch die Gestaltung der Außenkante des Schlittens in Richtung des Mittelpunkts des Werkzeugträgers bestimmt.

Vorteilhafte Ausgestaltungen der Erfindung sind in den Patentansprüchen 2 bis 14 und 16 angegeben.

Das zweite Getrieberad mit den innen angeordneten Planetenrädern und der gleichzeitigen Verkopplung dieses zweiten Getrieberades mit der Voll- oder Hohlwelle nach der Weiterbildung des Patentanspruchs 2 führt zu einer Synchronisation der Bewegungen zwischen dem ersten Getrieberad und der Voll- oder Hohlwelle. Damit bewegt sich auch das innen und außen verzahnte Stirnrad mit der Bewegung der Voll- oder Hohlwelle. Nur deren relative Geschwindigkeitsänderung im positiven oder negativen Sinn führt zu einer Bewegung der Schlittenantriebswelle. Der Verschleiß während dieser Relativbewegungen zwischen dem innen und außen verzahnten Stirnrad und der Voll- oder Hohlwelle wird minimiert. Gleichzeitig werden dadurch auftretende Unwuchten weitestgehend vermieden, so dass die Lebensdauer dieser Realisierungen steigt.

Durch eine parallele und feste Anordnung der Achsen des Zentralrades, des zweiten Getrieberades und der Voll- oder Hohlwelle werden für das Getriebe nur Stirnräder eingesetzt, so dass in axialer Richtung ein minimaler Platzbedarf gegeben ist.

Die Nutzung des zweiten Getrieberades gleichzeitig als Antriebsrad der Voll- oder Hohlwelle nach der Weiterbildung des Patentanspruchs 3 vereinfacht den Aufbau der erfindungsgemäßen Vorrichtung.

Der mindestens eine Gleitring am innen und außen verzahnten Stirnrad nach der Weiterbildung des Patentanspruchs 4 gewährleistet gleichzeitig die rotationssymmetrische und stabile Position dessen gegenüber der Voll- oder Hohlwelle.

Der Werkzeugträger besitzt nach der Weiterbildung des Patentanspruchs 5 mehrere Schlitten, die über jeweils eine Schlittenantriebswelle in der Voll- oder Hohlwelle drehbar gelagert sind. Mehrere Schlitten mit den einzelnen Werkzeugen und gleichen Winkeln zueinander sichert eine geringe Unwucht während der Drehbewegung des Werkzeugträgers.

Ein weiterer Vorteil besteht darin, dass die Voll- oder Hohlwelle einschließlich der innliegenden Schlittenantriebswellen so gestaltbar sind, dass Werkzeugträger mit unterschiedlicher Anzahl von Schlitten einschließlich der Werkzeuge an eine Voll- oder Hohlwelle montierbar sind. Dieser Sachverhalt unterstreicht den multifunktionalen Charakter der erfindungsgemäßen Vorrichtung.

Die Ausbildung der multifunktionalen Vorrichtung nach der Weiterbildung des Patentanspruchs 6 führt zu einer gleichzeitigen Bewegung der Werkzeuge gegenüber dem Werkstück. Die Werkzeuge bearbeiten nur Teilbereiche des Werkstücks, so dass eine ökonomische Bearbeitung gegeben ist. Gleichzeitig erhöht sich die Standzeit der Werkzeuge.

Die Realisierung der multifunktionalen Vorrichtung nach der Weiterbildung des Patentanspruchs 7 erhöht den multifunktionalen Charakter der Vorrichtung. Dabei werden die Merkmale der Patentansprüche 5 und 6 miteinander kombiniert. Mehrere Werkzeuge sind gleichzeitig und weitere Werkzeuge unabhängig davon zum Werkstück oder von diesem weg bewegbar. Die Werkzeugträger sind für mehrere Bearbeitungen des Werkstücks geeignet. Umrüstzeiten für die einzelnen Bearbeitungsschritte werden minimiert oder vollständig eingespart.

Eine formschlüssige und lösbare Verbindung zwischen der Schlittenantriebswelle in der Voll- oder Hohlwelle und des Kegelrad-, Schrauben- oder Schneckengetriebes im Werkzeugträger zur Bewegung des Schlittens nach der Weiterbildung des Patentanspruchs 8 erleichtert das Wechseln der Werkzeugträger. Umrüstzeiten und daraus resultierende Standzeiten der erfindungsgemäßen Vorrichtung werden minimiert. Dieser Sachverhalt unterstreicht den multifunktionalen Charakter.

Günstige Ausgestaltungen des linearen Antriebs des Schlittens sind nach der Weiterbildung des Patentanspruchs 9 ein Schraub- oder Kugelgewindetrieb.

An den mindestens einen Schlitten des Werkzeugträgers wird nach der Weiterbildung des Patentanspruchs 10 ein Werkzeug lösbar befestigt. Günstige Werkzeuge sind insbesondere Meißel zum Abstechen, Plandrehen, Anphasen und Gewindeschneiden. Natürlich sind auch andere Werkzeuge mit den Schlitten verbindbar.

Die Ausbildung der erfindungsgemäßen Vorrichtung nach der Weiterbildung des Patentanspruchs 11 führt zu einer Bearbeitung unter Zuführung von Kühlmittel. Während der Bearbeitung sind größere Schnittkräfte realisierbar. Das führt zum einen zu einer Steigerung der Bearbeitungsgeschwindigkeit und zum anderen ist beim Einbringen von Gewindeabschnitten in insbesondere Rohrenden dieser Sachverhalt von besonderer Bedeutung.

Der mittig in der Voll- oder Hohlwelle angeordnete und zu bearbeitende Endbereich des Werkstücks nach der Weiterbildung des Patentanspruchs 12 sichert einen weitestgehend gleichzeitigen Eingriff mehrerer Werkzeuge in das Werkstück. Dieser Sachverhalt sichert, dass daraus resultierende Unwuchten weitestgehend nicht auftreten. Die Standfestigkeit der Vorrichtung wird bei minimal ausgeführten Fundamenten gewährleistet.

Die Ausgestaltung der Hohlwelle nach der Weiterbildung des Patentanspruchs 13 ermöglicht die Positionierung von Teilen des Werkstücks in der Vorrichtung. Das Werkstück ist durch die Vorrichtung bewegbar, so dass eine kontinuierliche Bearbeitung der Endbereiche des Werkstücks gegeben ist. Ein Drehen des Werkstücks ist nicht notwendig. Dieser Sachverhalt ist besonders bei sehr langen Werkstücken von besonderer Bedeutung. Eine erfindungsgemäße Vorrichtung und mehrere Spanneinrichtungen sind für die Bearbeitung insbesondere sehr langer Werkstücke geeignet. Damit ist ein sehr einfacher und multifunktionaler Aufbau gegeben. Werkstücke sind sehr ökonomisch bearbeitbar.

Die Ausführung der einzelnen Getrieberäder als Zahnräder in Form von Stirnrädern nach der Weiterbildung des Patentanspruchs 14 sichert eine sehr schmale Bauform des gesamten Getriebes. Gleichzeitig sind mehrere Getriebe zum Bewegen der Schlittenantriebswellen in der Voll- oder Hohlwelle nebeneinander leicht anordenbar, so dass auch dabei ein geringes Bauvolumen gewährleistet wird.

Die Kopplung zweier erfindungsgemäßen Vorrichtungen an einen Antrieb nach der Weiterbildung des Patentanspruchs 16 vereinfacht die Realisierung wesentlich.

Ausführungsbeispiele der Erfindung sind in den Zeichnungen dargestellt und werden im folgenden näher beschrieben.

Es zeigen:
- Fig. 1: eine prinzipielle Darstellung einer Vorrichtung mit einem Getriebe zwischen angetriebener Hohlwelle und Schlittenantriebswelle und der Verkopplung des Getriebes mit einem Antrieb für einen Schlitten mit einem Werkzeug,
- Fig. 2: schematische Darstellung einer Vorderansicht einer Vorrichtung mit vier Schlitten,

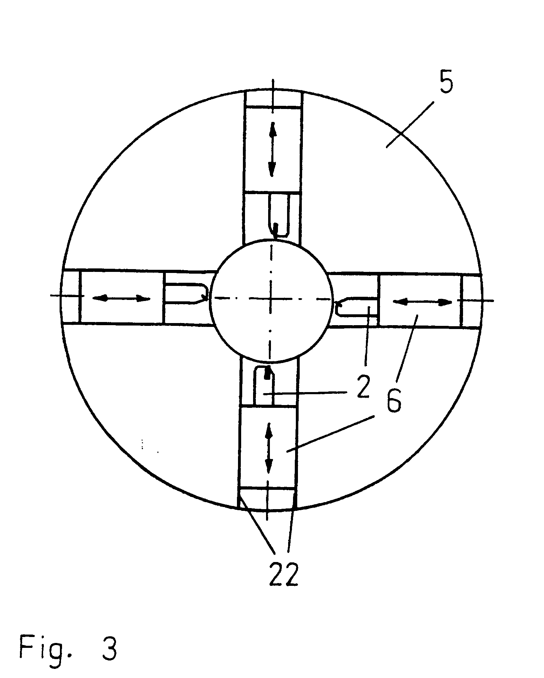

- Fig. 3: eine Darstellung eines Werkzeugträgers in der Vorderansicht mit vier Schlitten und je einem Werkzeug,
- Fig. 4: eine prinzipielle Darstellung einer Vorrichtung mit einer Kühlmittelleitung zum Werkzeug und
- Fig. 5: eine prinzipielle Darstellung zweier Vorrichtungen zur Bearbeitung der Enden eines rohrförmigen Werkstücks.

### 1. Ausführungsbeispiel

Die multifunktionale Vorrichtung zur Bearbeitung des Endbereichs von Werkstücken 3 durch Drehen mit mindestens einem umlaufenden Werkzeug 2 und stehendem Werkstück 3 besteht in einem ersten Ausführungsbeispiel aus einem Gestell 1, einer angetriebenen Hohlwelle 4, Werkzeugträger 5 und einer Spanneinrichtung für das Werkstück 3. Die Werkzeugträger 5 zeichnen sich dadurch aus, dass diese mehrere Schlitten 6 als Befestigungseinrichtungen für je mindestens ein Werkzeug 2 aufweisen. Dabei kommen Werkzeugträger 5 mit zwei, drei, fünf, einem mehrfachen von zwei oder drei Schlitten 6 zum Einsatz. In dem ersten Ausführungsbeispiel wird anhand eines Werkzeugträgers 5 mit vier Schlitten 6 der Aufbau näher erläutert.

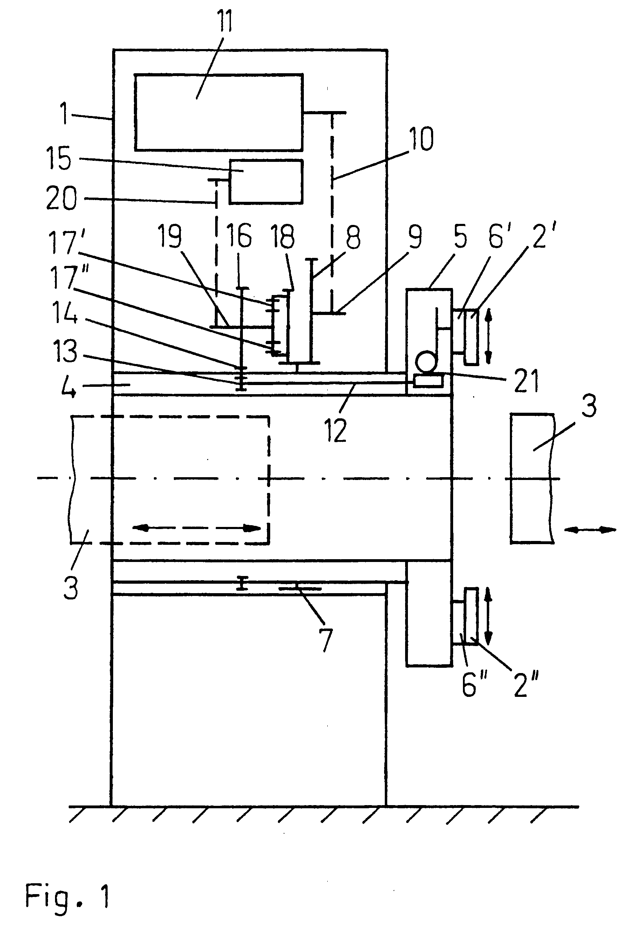

Das Werkstück 3 ist insbesondere ein Rohr, dessen Endbereiche bearbeitet werden. Bearbeiten bedeutet dabei zum einen Abstechen und/oder Plandrehen oder zum anderen Anphasen und/oder Gewindeschneiden. Die Fig. 1 zeigt einen prinzipiellen Aufbau der Vorrichtung.

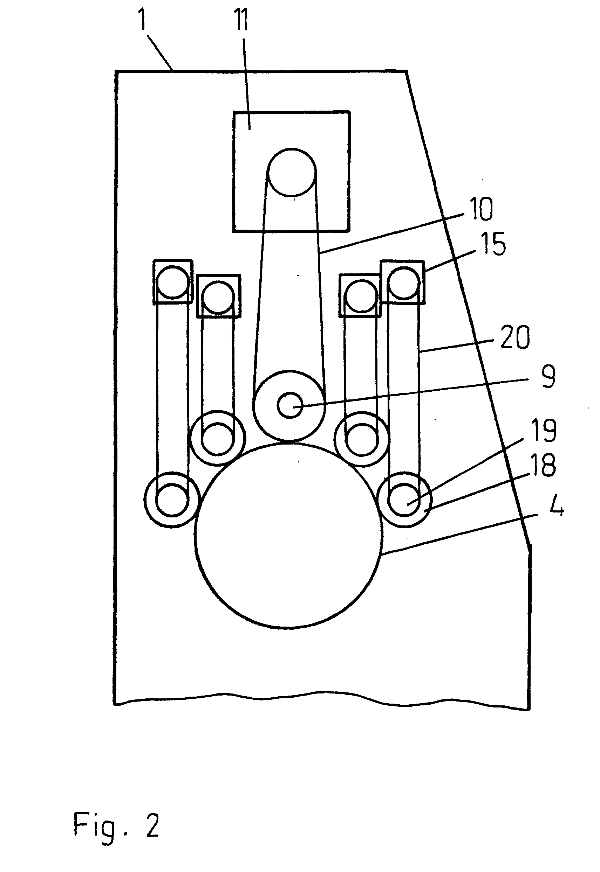

Die Hohlwelle 4 ist mit dem Gestell 1 drehbar verbunden. Der Antrieb der Hohlwelle 4 erfolgt als Außenrandpaar eines Zahnradgetriebes. Dazu besitzt die Hohlwelle 4 einen umlaufenden Zahnkranz 7 in dem ein Stirnrad 8 eingreift. Die Welle 9 dieses Stirnrades 8 ist über wenigstens einen Zahnriemen 10 mit einem Antrieb 11 für die Hohlwelle 4 verbunden. Dieser Antrieb 11 ist an dem Gestell 1 befestigt (Darstellung in der Fig. 1). Dabei zeigt die Fig. 1 eine der besseren Übersicht wegen dargestellte Variante. Die Welle 9 ist auch in entgegengestzter Richtung anordenbar, so dass die Antriebswellen der Antriebe 11 und 15 in einer Ebene angeordnet sind (Darstellung in der Fig. 2).

Im Körper der Hohlwelle 4 sind in radialer Richtung vier Schlittenantriebswellen 12 nebeneinander drehbar gelagert. In der Hohlwelle 4 sind auch zwei, drei, fünf, ein mehrfaches von zwei oder drei Schlittenantriebswellen 12 integrierbar. Das erste Ende jeder Schlittenantriebswelle 12 endet an einem Ende der Hohlwelle 4, während die anderen in der Hohlwelle 4 jeweils mit einem Stirnzahnrad 13 so versehen sind, dass die Verzahnungen von außen zugänglich sind. Die Schlittenantriebswellen 12 besitzen eine unterschiedliche Länge, so dass die Stirnzahnräder 13 der Schlittenantriebswellen 12 in Richtung der Mittellinie der Hohlwelle 4 nebeneinander angeordnet sind. In der Fig. 1 ist nur eine Schlittenantriebswelle 14 dargestellt. Die Fig. 2 zeigt eine Vorderansicht mit vier Schlittenantriebswellen 14. In die Verzahnung der Stirnzahnräder 13 der Schlittenantriebswellen 12 greift jeweils ein innen und außen verzahntes Stirnrad 14 ein. Diese sind weiterhin auf dem Umfang der Hohlwelle 4 so angeordnet, dass diese gegenüber der Hohlwelle 4 radial verschiebbar sind. Dazu befinden sich zwischen den innen und außen verzahnten Stirnrädern 14 und der Oberfläche der Hohlwelle 4 Gleitringe insbesondere aus einer Kupferlegierung. Die innen und außen verzahnten Stirnräder 14 weisen im Querschnitt eine T-Form auf. Der vertikale Teil des T wird dabei jeweils von zwei Gleitringen eingeschlossen. Dadurch ist eine feste Position der innen und außen verzahnten Stirnräder 14 gegenüber der Hohlwelle 4 gegeben.

Die innen und außen verzahnten Stirnräder 14 sind über jeweils ein Planetenradgetriebe zum einen mit dem umlaufenden Zahnkranz 7 der Hohlwelle 4 und zum anderen mit jeweils einem Antrieb 15 verbunden. Die Planetenradgetriebe sind gegenüber der drehbaren Hohlwelle 4 fest an dem Gestell 1 angeordnet. Der Steg 16 jedes Planetenradgetriebes ist als ein erstes Getrieberad 16 als Stirnzahnrad ausgebildet, dass in das jeweilige innen und außen verzahnte Stirnrad 14 eingreift. Die Planetenräder 17 der Planetenradgetriebe befinden sich jeweils in einem innenverzahnten Zahnrad 18 als zweites Getrieberad 18. In der Fig. 1 sind das Stirnrad 8 und das zweite Getrieberad 18 der Übersichtlichkeit wegen nebeneinander dargestellt. Tatsächlich befinden sich beide in einer Ebene (Darstellung in der Fig. 2). Diese innenverzahnten Zahnräder 18 weisen weiterhin eine Außenverzahnung so auf, dass diese in den Zahnkranz 7 der Hohlwelle 4 eingreifen. Die Wellen 19 der Zentralräder der Planetenradgetriebe sind über jeweils mindestens einen Zahnriemen 20 mit je einem Antrieb 15 für die Schlitten 6 mit den damit lösbar befestigten Werkzeugen 2 verbunden. Die Wellen 19 der Zentralräder sind drehbar im Gestell 1 angeordnet und die Antriebe 15 sind an dem Gestell 1 befestigt. Die Fig. 1 zeigt schematisch prinzipiell den Aufbau des Getriebes der Vorrichtung.

An dem Ende der Hohlwelle 4 mit den ersten Enden der Schlittenantriebswellen 12 ist der Werkzeugträger 5 lösbar befestigt. Der Werkzeugträger 5 ist ein Körper mit dem Querschnitt eines Kreisrings. Die Innendurchmesser der Hohlwelle 4 und des Werkzeugträgers 5 besitzen vorteilhafterweise die gleichen Abmessungen.

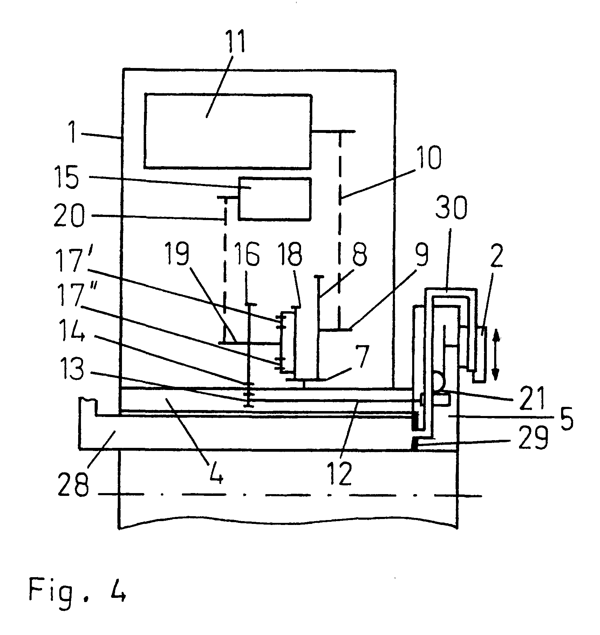

In dem Körper und in der Oberfläche der kreisförmigen Stirnfläche des Werkzeugträgers 5 befinden sich vier Gleitführungen 22 zur Aufnahme von Schlitten 6, auf denen lösbar jeweils mindestens ein Werkzeug 2 befestigt ist. Als Gleitführungen 22 sind vorteilhafterweise Schwalbenschwanz- oder Prismenführungen eingesetzt. Die Gleitführungen 22 sind geradlinig ausgebildet und schließen einen Winkel von 90° gegeneinander ein. Die Fig. 4 zeigt einen derartig ausgebildeten Werkzeugträger 5. Im Körper des Werkzeugträgers 5 sind je Schlitten 6 eine Gewindespindel drehbar gelagert. Die Gewindespindeln und die Schlitten sind so ausgestaltet, dass ein bekannter Schraub- oder Kugelgewindetrieb realisiert ist. Die Gewindespindeln sind weiterhin jeweils über mindestens ein Schneckengetriebe 21 und eine lösbare und formschlüssige Kupplung mit der Schlittenantriebswelle 12 in der Hohlwelle 4 verbunden. Damit sind die Schlitten 6 und die Werkzeuge 2 unabhängig der Drehbewegung der Hohlwelle 4 in Richtung zur Mitte des Werkzeugträgers 5 oder von dieser weg bewegbar.

An einer Hohlwelle 4 mit zwei, drei, fünf, einem mehrfachen von zwei oder drei Schlittenantriebswellen 12 sind Werkzeugträger 5 mit einer unterschiedlichen Anzahl von Schlitten 6 anbringbar. Die Positionen der Schlittenantriebswellen 12 gegenüber den Wellen der Schneckengetriebe im Werkzeugträger 5 sind dabei gleich zu gestalten. Damit ist z.B. an eine Hohlwelle 4 mit sechs Schlittenantriebswellen 12 auch ein Werkzeugträger 5 mit drei Schlitten 6 anbringbar. Dieser Sachverhalt unterstreicht den multifunktionalen Charakter der Vorrichtung.

Das Gestell 1 der Vorrichtung ist fest auf einer Standfläche angeordnet.

Mindestens eine Spanneinrichtung für das Werkstück 3 plaziert zum einen zumindest ein Endbereich des Werkstücks 3 mittig zur Hohlwelle 4 einschließlich des Werkzeugträgers 5 und bewegt das Werkstück 3 zum anderen in Richtung der Werkzeuge 2. Falls das Werkstück 3 kleiner als der Innendurchmesser der Hohlwelle 4 und des Werkzeugträgers 5 ist, kann das Werkstück 3 auch durch diese hindurchgeführt werden. Dabei besteht weiterhin die Möglichkeit, die Spanneinrichtung axial in die Hohlwelle 4 einzubringen und/oder hinein-/ herauszufahren, wobei diese verdrehfest gegenüber der sich drehenden Hohlwelle 4 der multifunktionalen Vorrichtung ist. Die Spanneinrichtung ist in bekannter Weise realisiert. Bei sehr langen Werkstücken 3 werden vorteilhafterweise mehrere Spanneinrichtungen eingesetzt, so dass eine plane und zur Oberfläche rechtwinklige Bearbeitung der Stirnflächen der Werkstücke 3 möglich ist.

### 2. Ausführungsbeispiel

Die multifunktionale Vorrichtung zur Bearbeitung des Endbereichs von Werkstücken 3 durch Drehen mit mindestens einem umlaufenden Werkzeug 2 und stehendem Werkstück 3 ist in einem zweiten Ausführungsbeispiel ähnlich dem ersten Ausführungsbeispiel realisiert. Der Erläuterung dient die Darstellung in der Fig. 1.

Im Gegensatz zum ersten Ausführungsbeispiel sind im Körper der Hohlwelle 4 in radialer Richtung drei Schlittenantriebswellen 12 nebeneinander drehbar gelagert. In der Hohlwelle 4 sind auch zwei, drei, fünf, ein mehrfaches von zwei oder drei Schlittenantriebswellen 12 integrierbar. Das erste Ende jeder Schlittenantriebswelle 12 endet an einem Ende der Hohlwelle 4, während die anderen in der Hohlwelle 4 jeweils mit einem Stirnzahnrad 13 so versehen sind, dass die Verzahnungen von außen zugänglich sind. Die Schlittenantriebswellen 12 besitzen die gleiche Länge. In die Verzahnung der Stirnzahnräder 13 der Schlittenantriebswellen 12 greift ein innen und außen verzahntes Stirnrad 14 ein. Dieses ist weiterhin auf dem Umfang der Hohlwelle 4 so angeordnet, dass es gegenüber der Hohlwelle 4 radial verschiebbar ist. Dazu befinden sich zwischen dem innen und außen verzahnten Stirnrad 14 und der Oberfläche der Hohlwelle 4 Gleitringe insbesondere aus einer Kupferlegierung. Das innen und außen verzahnte Stirnrad 14 weist im Querschnitt eine T-Form auf. Der vertikale Teil des T wird dabei jeweils von zwei Gleitringen eingeschlossen. Dadurch ist eine feste Position des innen und außen verzahnten Stirnrades 14 gegenüber der Hohlwelle 4 gegeben.

Das innen und außen verzahnte Stirnrad 14 ist über ein Planetenradgetriebe zum einen mit dem umlaufenden Zahnkranz 7 der Hohlwelle 4 und zum anderen mit einem Antrieb 15 verbunden. Das Planetenradgetriebe ist gegenüber der drehbaren Hohlwelle 4 fest an dem Gestell 1 angeordnet. Der Steg 16 des Planetenradgetriebes ist als ein erstes Getrieberad 16 als Stirnzahnrad ausgebildet, dass in das innen und außen verzahnte Stirnrad 14 eingreift. Die Planetenräder 17 des Planetenradgetriebes befinden sich jeweils in einem innenverzahnten Zahnrad 18 als zweites Getrieberad 18. Dieses innenverzahnte Zahnrad 18 besitzt weiterhin eine Außenverzahnung, die in den Zahnkranz 7 der Hohlwelle 4 eingreift. Die Welle 19 des Zentralrades des Planetenradgetriebes ist über jeweils mindestens einen Zahnriemen 20 mit einem Antrieb 15 für die Schlitten 6 mit den damit lösbar befestigten Werkzeugen 2 verbunden. Die Welle 19 des Zentralrades ist drehbar im Gestell 1 angeordnet und der Antrieb 15 ist am Gestell 1 befestigt. Die Fig. 1 zeigt schematisch prinzipiell den Aufbau des Getriebes der Vorrichtung.

Der Aufbau und die Positionierung des Werkzeugträgers 5 entspricht denen des ersten Ausführungsbeispiels. Bei drei Schlitten 6 schließen die Gleitführungen 22 einen Winkel von jeweils 120° ein. Eine Spanneinrichtung für das Werkstück 3 plaziert zum einen zumindest ein Endbereich des Werkstücks 3 mittig zur Hohlwelle 4 einschließlich des Werkzeugträgers 5 und bewegt das Werkstück 3 zum anderen in Richtung der Werkzeuge 2 entsprechend dem ersten Ausführungsbeispiel.

Die verschiedenen Merkmale des ersten und zweiten Ausführungsbeispiels sind auch in Kombination einsetzbar. Also gleichzeitiger Antrieb mehrerer Schlitten 6 und Antrieb wenigstens eines weiteren Schlittens 6 unabhängig der ersteren.

### 3. Ausführungsbeispiel

Der Aufbau der multifunktionalen Vorrichtung zur Bearbeitung des Endbereichs von Werkstücken 3 durch Drehen mit mindestens einem umlaufenden Werkzeug 2 und stehendem Werkstück 3 besitzt in einem dritten Ausführungsbeispiel den Aufbau entsprechend des ersten oder zweiten Ausführungsbeispiels.

Zusätzlich zu der Vorrichtung des ersten oder zweiten Ausführungsbeispiels befindet sich ein hohlzylindrischer Körper 24 zwischen der drehbaren Hohlwelle 4 und dem feststehenden Werkstück 3. Der hohlzylindrische Körper 24 ist analog dem Werkstück 3 feststehend. Der Innendurchmesser des hohlzylindrischen Körpers 24 ist größer als der des Werkstücks 3, so dass das Werkstück 3 durch die gesamte Vorrichtung führbar ist.

Der Werkzeugträger 5 und der hohlzylindrische Körper 24 sind so ausgestaltet, dass Kreisabschnitte der Stirnflächen mit einem Abstand und parallel zueinander angeordnet sind. In dem Kreisabschnitt der Stirnfläche des hohlzylindrischen Körpers 24 ist eine umlaufende Nut eingebracht. Die Nut befindet sich weiterhin zwischen O-Ringdichtungen 25. Diese überragen die Stirnfläche des hohlzylindrischen Körpers 24, so dass der Abstand zwischen dieser und der des Werkzeugträgers 5 vollständig ausgefüllt ist.

Die Nut ist über wenigstens eine im hohlzylindrischen Körper 24 integrierten ersten Kühlmittelleitung und einer Pumpe mit einem Kühlmittelbehälter verbunden. Die Pumpe und der Kühlmittelbehälter sind entweder an dem Gestell 1 befestigt oder befinden sich auf einem separaten Platz. Zweite Kühlmittelleitungen 26 befinden sich parallel zu den Schubgelenken im Werkzeugträger 5. Diese sind teleskopartig realisiert und damit in ihrer Länge veränderbar. Diese zweiten Kühlmittelleitungen 26 enden jeweils in Nähe der Werkzeuge 2, so dass diese während des Eingriffs in das Werkstück 3 und damit während der Bearbeitung mit dem Kühlmittel beaufschlagt werden. Die anderen Enden der zweiten Kühlmittelleitungen 26 befinden sich gegenüber der Nut im hohlzylindrischen Körper 24. Die Fig. 4 zeigt einen prinzipiellen Aufbau der Vorrichtung mit einer zweiten Kühlmittelleitung 26 zu den Werkzeugen 2.

### 4. Ausführungsbeispiel

Zwei multifunktionale Vorrichtungen zur Bearbeitung des Endbereichs von Werkstücken 3 durch Drehen mit mindestens einem umlaufenden Werkzeug 2 und stehendem Werkstück 3 werden in einem vierten Ausführungsbeispiel eingesetzt.

Jede der Vorrichtungen besteht analog dem ersten, zweiten oder dritten Ausführungsbeispiel aus einem Gestell 1, einer angetriebenen Hohl- oder Vollwelle 4, mehreren Werkzeugträgern 5 und mindestens einer Spanneinrichtung 23 für das Werkstück 3. In Abwandlung des ersten, zweiten oder dritten Ausführungsbeispiels ist im vierten Ausführungsbeispiel die Hohlwelle 4 in einer ersten Ausführungsform bei einer Trockenbearbeitung des Werkstücks 3 eine Vollwelle 4 oder in einer zweiten Ausführungsform bei einer Naßbearbeitung mit einem Kühlmittel während der Bearbeitung eine Hohlwelle 4 mit einem in der Hohlwelle 4 angeordneten zylindrischen Körper. Der zylindrische Körper entspricht in seiner Funktion und dem grundsätzlichen Aufbau, es fehlt nur die Öffnung zur Aufnahme des Werkstücks 3, dem des hohlzylindrischen Körpers 24 des dritten Ausführungsbeispiels. Die Werkzeugträger 5 sind kreisförmig ausgebildet. An dem Werkzeugträger 5 sind zwei, drei, fünf, ein mehrfaches von zwei oder drei Schlitten 6 angeordnet, an die jeweils ein Werkzeug 2 oder ein Sensor lösbar befestigt sind.

Das zu bearbeitende Werkstück 3 ist ein Rohr, dessen Endbereiche bearbeitet werden. Bearbeiten bedeutet dabei Abstechen und Plandrehen oder Anphasen und Gewindeschneiden. Der Aufbau einer der Vorrichtungen entspricht prinzipiell denen der Darstellungen 1 bis 4.

Die beiden multifunktionalen Vorrichtungen sind in dem vierten Ausführungsbeispiel so zueinander angeordnet, dass sich die Werkzeugträger 5 gegenüberstehen. Zwischen den Vorrichtungen befindet sich das Werkstück 3 mindestens in einer Spanneinrichtung 23. Die Anzahl der Spanneinrichtungen 23 richtet sich nach der Länge des Werkstücks 3. Die Enden des Werkstücks 3 werden jeweils mittig zu den Volloder Hohlwellen 4 der Vorrichtungen plaziert. Für die Bearbeitung der Enden des Werkstücks 3 wird die mindestens eine Spanneinrichtung 23 in die Richtungen zu den Vorrichtungen bewegt.

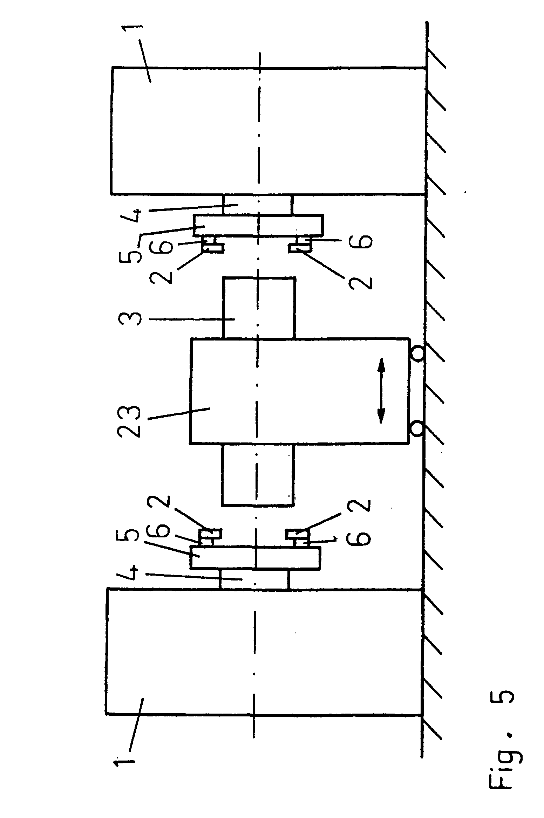

Die Voll- oder Hohlwellen 4 der Vorrichtungen sind entweder mit jeweils einem Antrieb oder mit einem Antrieb verbunden. Die Fig. 5 zeigt prinzipiell eine derartige Realisierung.

## Patentansprüche

1. Multifunktionale Vorrichtung zur Bearbeitung des Endbereichs von Werkstücken (3) durch Drehen mit mindestens einem umlaufenden Werkzeug (2) und stehendem Werkstück (3), wobei an einer an einem Gestell (1) drehbar angeordneten und angetriebenen Voll- oder Hohlwelle (4) ein kreis- oder kreisringförmiger Werkzeugträger (5) lösbar befestigt ist, der Werkzeugträger (5) mindestens einen quer zur Drehachse der Voll- oder Hohlwelle (4) verfahrbaren und der lösbaren Befestigung eines Werkzeuges (2) oder eines Sensors dienenden Schlitten (6) aufweist, mindestens eine in der Voll- oder Hohlwelle (4) drehbar gelagerte Schlittenantriebswelle (12) über wenigstens ein Planetenradgetriebe mit der Voll- oder Hohlwelle (4) verbunden ist und der Schlitten (6) über ein Schubgelenk und mindestens ein Kegelrad-, Schrauben- oder Schneckengetriebe (21) mit der Schlittenantriebswelle (12) verbunden ist, wobei das Zentralrad des Planetenradgetriebes mit einem Antrieb (15) verbunden und dass wenigstens eine Spanneinrichtung für das Werkstück (3) gegenüber der Voll- oder Hohlwelle (4) verfahrbar angeordnet sind **dadurch gekennzeichnet, dass** der Steg (16) des Planetenradgetriebes ein mit der Schlittenantriebswelle (12) in der Voll- oder Hohlwelle (4) über ein innen und außen verzahntes Stirnrad (14) verbundenes erstes Getrieberad (16) ist und dass das innen und außen verzahnte Stirnrad (14) auf der Voll- oder Hohlwelle (4) gegenüber deren Umfang radial gleitend verschiebbar angeordnet ist.

2. Multifunktionale Vorrichtung nach Patentanspruch 1, **dadurch gekennzeichnet, dass** sich die Planetenräder (17) in einem mit der Voll- oder Hohlwelle (4) verbundenem zweiten Getrieberad (18) befinden und dass die Achsen des Zentralrades, des zweiten Getrieberades (18) und der Voll- oder Hohlwelle (4) parallel und fest positioniert zueinander angeordnet sind.

3. Multifunktionale Vorrichtung nach Patentanspruch 2, **dadurch gekennzeichnet, dass** das zweite Getrieberad (18) gleichzeitig das Antriebsrad der Voll- oder Hohlwelle (4) ist.

4. Multifunktionale Vorrichtung nach den Patentansprüchen 1 und 2, **dadurch gekennzeichnet, dass** das innen und außen verzahnte Stirnrad (14) über mindestens einen Gleitring gegenüber der Voll- oder Hohlwelle (4) positioniert ist.

5. Multifunktionale Vorrichtung nach Patentanspruch 1, **dadurch gekennzeichnet, dass** der Werkzeugträger (5) zwei, drei, fünf, ein mehrfaches von zwei oder ein mehrfaches von drei Schlitten (6) besitzt, dass mehrere Schlittenantriebswellen (12) in der Voll- oder Hohlwelle (4) vorhanden sind, dass jede Schlittenantriebswelle (12) über ein Planetenradgetriebe mit der Voll- oder Hohlwelle (4) verbunden ist, dass jeder Steg (16) des Planetenradgetriebes ein mit der jeweiligen Schlittenantriebswelle (12) über je ein innen und außen verzahntes Stirnrad (14) verbundenes erstes Getrieberad (16) ist, dass die innen und außen verzahnten Stirnräder (14) gegenüber der Voll- oder Hohlwelle (4) gleitend verschiebbar angeordnet sind, dass jedes Zentralrad des Planetenradgetriebes mit einem Antrieb (15) verbunden ist.

6. Multifunktionale Vorrichtung nach Patentanspruch 1, **dadurch gekennzeichnet, dass** der Werkzeugträger (5) zwei, drei, fünf, ein mehrfaches von zwei oder ein mehrfaches von drei Schlitten (6) besitzt, dass mehrere Schlittenantriebswellen (12) in der Voll- oder Hohlwelle (4) vorhanden sind, dass mehrere Schlittenantriebswellen (12) über ein Planetenradgetriebe mit der Voll- oder Hohlwelle (4) verbunden sind, dass der Steg (16) des Planetenradgetriebes ein mit den Schlittenantriebswellen (12) über ein innen und außen verzahntes Stirnrad (14) verbundenes erstes Getrieberad (16) ist, dass das innen und außen verzahnte Stirnrad (14) gegenüber der Voll- oder Hohlwelle (4) gleitend verschiebbar angeordnet ist und dass das Zentralrad des Planetenradgetriebes mit einem Antrieb (15) verbunden ist.

7. Multifunktionale Vorrichtung nach Patentanspruch 1, **dadurch gekennzeichnet, dass** der Werkzeugträger (5) drei, fünf, ein mehrfaches von zwei oder ein mehrfaches von drei Schlitten (6) besitzt, dass mehrere Schlittenantriebswellen (12) in der Voll- oder Hohlwelle (4) vorhanden sind, dass mehrere Schlittenantriebswellen (12) über ein erstes Planetenradgetriebe mit der Voll- oder Hohlwelle (4) verbunden sind, dass der Steg (16) des ersten Planetenradgetriebes ein mit den Schlittenantriebswellen (12) über ein erstes innen und außen verzahntes Stirnrad (14) verbundenes erstes Getrieberad (16) ist, dass mindestens eine Schlittenantriebswelle (12) über ein zweites Planetenradgetriebe mit der Voll- oder Hohlwelle (4) verbunden ist, dass der Steg (16) des zweiten Planetenradgetriebes ein mit der Schlittenantriebswelle (12) über ein zweites innen und außen verzahntes Stirnrad (14) verbundenes weiteres erstes Getrieberad (16) ist, dass die innen und außen verzahnten Stirnräder (14) gegenüber der Voll- oder Hohlwelle (4) gleitend verschiebbar angeordnet sind, dass die Zentralräder des ersten und zweiten Planetenradgetriebes mit jeweils einem Antrieb (15) verbunden sind.

8. Multifunktionale Vorrichtung nach Patentanspruch 1, **dadurch gekennzeichnet, dass** sich die Verbindung zwischen der Schlittenantriebswelle (12) und des Kegelrad-, Schrauben- oder Schneckengetriebes (21) des Werkzeugträgers (5) an der Stirnfläche gegenüber den Schlitten (6) befindet und dass die Verbindung formschlüssig und lösbar ist.

9. Multifunktionale Vorrichtung nach Patentanspruch 1, **dadurch gekennzeichnet, dass** das Schubgelenk des Schlittens (6) ein Schraub- oder Kugelgewindetrieb ist.

10. Multifunktionale Vorrichtung nach Patentanspruch 1, **dadurch gekennzeichnet, dass** der Schlitten (6) mit mindestens einem Werkzeug (2) lösbar versehen ist.

11. Multifunktionale Vorrichtung nach Patentanspruch 10, **dadurch gekennzeichnet, dass** zwischen der Voll- oder der Hohlwelle (4) und dem Werkstück (3) ein hohlzylindrischer oder zylindrischer Körper (24) angeordnet ist, dass jeweils ein Kreisabschnitt der Stirnfläche des Werkzeugträgers (5) und des hohlzylindrischen oder zylindrischen Körpers (24) mit einem Abstand und parallel zueinander angeordnet sind, dass der hohlzylindrische oder der zylindrische Körper (24) und/oder der Werkzeugträger (5) in der zueinander gerichteten Fläche eine umlaufende Nut besitzt, dass die wenigstens eine Nut von mindestens einer O-Ringdichtung (25) an jeder Seite der Nut vollständig eingeschlossen ist, dass die O-Ringdichtung (25) die Fläche, in der sie angeordnet ist, so überragt, dass der Abstand zwischen den Kreisabschnitten der sich gegenüberliegenden Stirnflächen durch die O-Ringdichtung (25) vollständig ausgefüllt ist, dass die Nut wenigstens über eine im hohlzylindrischen oder zylindrischen Körper (24) integrierten ersten Kühlmittelleitung und einer Pumpe mit einem Kühlmittelbehälter verbunden ist, dass parallel zum Schubgelenk im Werkzeugträger (5) eine in ihrer Länge veränderbare und teleskopartig realisierte zweite Kühlmittelleitung (26) angeordnet ist, dass das erste Ende der zweiten Kühlmittelleitung (26) und die Nut eine durchgehende Öffnung sind, dass sich das zweite Ende der zweiten Kühlmittelleitung (26) unmittelbar am Werkzeug (2) befindet und dass zweite Ende der zweiten Kühlmittelleitung (26) nach außen endet.

12. Multifunktionale Vorrichtung nach Patentanspruch 1, **dadurch gekennzeichnet, dass** die Spanneinrichtung so gegenüber der Voll- oder Hohlwelle (4) einschließlich des Werkzeugträgers (5) angeordnet ist, dass die Mittellinien der Voll- oder der Hohlwelle (4) und mindestens des Endbereichs des Werkstücks (3) die gleiche Position besitzen.

13. Multifunktionale Vorrichtung nach Patentanspruch 1, **dadurch gekennzeichnet, dass** der innere Durchmesser der Hohlwelle (4) und des Werkzeugträgers (5) größer als die größte Abmessung des Werkstücks (3) ist und dass das Werkstück (3) mittig in der Hohlwelle (4) verfahrbar angeordnet ist.

14. Multifunktionale Vorrichtung nach den Patentansprüchen 1 bis 13, **dadurch gekennzeichnet, dass** das/die Planetenradgetriebe Zahnradgetriebe ist/sind und dass die Getrieberäder Zahnräder in Form von Stirnrädern sind.

15. Multifunktionale Vorrichtung, **dadurch gekennzeichnet, dass** zwei multifunktionale Vorrichtungen nach Anspruch 1 zur Bearbeitung des Endbereichs von Werkstücken (3) durch Drehen mit mindestens einem umlaufenden Werkzeug (2) und stehendem Werkstück (3) so zueinander angeordnet sind, dass sich die Werkzeugträger (5) gegenüberstehen und sich dazwischen das Werkstück (3) befindet.

16. Multifunktionale Vorrichtung nach Patentanspruch 15, **dadurch gekennzeichnet, dass** die Voll- oder Hohlwellen (4) der Vorrichtungen an einen Antrieb (11) angekoppelt sind.

## Claims

1. A multifunctional device for machining the end section of work pieces (3) by turning on a lathe with a stationary work piece (3) and at least one revolving tool (2), wherein a circular or annulus-shaped tool carrier (5) is detachable and fixed onto a pivoted driven solid or hollow shaft (4) positioned in a frame (1), and wherein the tool carrier (5) has at least one slide (6) travelling transversely to the rotary axis of the solid or hollow shaft (4) and which functions as a detachable fixture for a tool (2) or a sensor, at least one pivoted in the solid or hollow shaft (4) slide drive shaft (12) is connected to the solid or hollow shaft (4) via at least one planetary gearing, and the slide (6) is connected to the slide drive shaft (12) via a thrust linkage and at least one bevel, helical or worm gear (21), whereby the bull gear of the planetary gearing is connected to a drive (15) and that at least one clamping device for the work piece (3) is movably positioned against the solid or hollow shaft (4), **characterized in that** the web (16) of the planetary gearing is a first gear wheel (16) which is connected to the slide drive shaft (12) in the solid or hollow shaft (4) via an internally and externally toothed spur gear (14) and that the internally and externally toothed spur gear (14) is positioned on the solid or hollow shaft (4) and can be radially slid-up against the shaft perimeter.

2. A multifunctional device according to Claim 1, **characterized in that** the planetary wheels (17) are positioned in a second gear wheel (18) which is connected to the solid or hollow shaft (4) and that the axes of the bull gear, the second gear wheel (18) and of the solid or hollow shaft (4) are securely positioned parallel to one another.

3. A multifunctional device according to Claim 2, **characterized in that** the second gear wheel (18) at the same time serves as the drive wheel for the solid or hollow shaft (4).

4. A multifunctional device according to Claims 1 and 2, **characterized in that** the internally and externally toothed spur gear (14) is positioned via at least one sliding ring against the solid or hollow shaft (4).

5. A multifunctional device according to Claim 1, **characterized in that** the tool carrier (5) has two, three, five, a multiple of two or a multiple of three slides (6), that several slide drive shafts (12) are arranged within the solid or hollow shaft (4), that each slide drive shaft (12) is connected to the solid or hollow shaft (4) via a planetary gearing, that each web (16) of the planetary gearing is a first gear wheel (16) which is connected to the corresponding slide drive shaft (12) via an internally and externally toothed spur gear (14) each, that the internally and externally toothed spur gears (14) are arranged sliding movably against the solid or hollow shaft (4), that each bull gear of the planetary gearing is connected to a drive (15).

6. A multifunctional device according to Claim 1, **characterized in that** the tool carrier (5) has two, three, five, a multiple of two or a multiple of three slides (6), that several slide drive shafts (12) are arranged within the solid or hollow shaft (4), that several slide drive shafts (12) are connected to the solid or hollow shaft (4) via a planetary gearing, that the web (16) of the planetary gearing is a first gear wheel (16) which is connected to the slide drive shafts (12) via an internally and externally toothed spur gear (14), that the internally and externally toothed spur gear (14) is arranged sliding movably in reference to the solid or hollow shaft (4), that each bull gear of the planetary gearing is connected to a drive (15).

7. A multifunctional device according to Claim 1, **characterized in that** the tool carrier (5) has two, three, five, a multiple of two or a multiple of three slides (6), that several slide drive shafts (12) are arranged within the solid or hollow shaft (4), that several slide drive shafts (12) are connected to the solid or hollow shaft (4) via a first planetary gearing, that the web (16) of the first planetary gearing is a first gear wheel (16) which is connected to the slide drive shafts (12) via a first internally and externally toothed spur gear (14), that at least one slide drive shaft (12) is connected to the solid or hollow shaft (4) via a second planetary gearing, that the web (16) of the second planetary gearing is a first gear wheel (16) which is connected to the slide drive shaft (12) via a second internally and externally toothed spur gear (14), that the internally and externally toothed spur gears (14) are arranged sliding movably against the solid or hollow shaft (4), that the bull gears of both the first and second planetary gearings are connected to one drive (15) each.

8. A multifunctional device according to Claim 1, **characterized in that** the connection between the slide drive shaft (12) and the bevel, helical or worm gear (21) of the tool carrier (5) is located on the front, opposite the slides (6) and that the connection is keyed and detachable.

9. A multifunctional device according to Claim 1, **characterized in that** the thrust linkage of the slide (6) is a helical gear or a ball screw drive.

10. A multifunctional device according to Claim 1, **characterized in that** the slide (6) is fitted with at least one detachable tool (2).

11. A multifunctional device according to Claim 10, **characterized in that** a cylindrical or cylindrical hollow body (24) is positioned between the solid or hollow shaft (4) and the work piece (3), that one of each circular segment both of the tool carrier (5) end face and the cylindrical or cylindrical hollow body (24) is positioned in parallel to one another with a given clearance, that the cylindrical or cylindrical hollow body (24) and/or the tool carrier (5) have a circumferential groove in the surface arranged as to each other, that at least one groove is completely enclosed on each side by at least one O-ring seal (25), that the O-ring seal (25) extends over the surface in which it is located such that the clearance between the circular segments of the diametrically opposed face surfaces is completely filled by the O-ring seal (25), that the groove is at least connected to a coolant receptacle via a first coolant supply pipe and a pump which are integrated into the cylindrical or cylindrical hollow body (24), that a second telescopic coolant supply pipe (26) with variable length is located parallel to the thrust linkage in the tool carrier (5), that the first end of the second coolant supply pipe (26) and the groove is a continuous opening, that the second end of the second coolant supply pipe (26) is located directly beside the tool (2) and that the second end of the second coolant supply pipe (26) passes out to an external connection.

12. A multifunctional device according to Claim 1, **characterized in that** the clamping device is positioned opposite the solid or hollow shaft (4) including the tool carrier (5) in such a way that the centre lines of the solid or hollow shaft (4) and of at least the end section of the work piece (3) are positioned identically.

13. A multifunctional device according to Claim 1, **characterized in that** the inside diameter of the hollow shaft (4) and the tool carrier (5) is greater than the maximum dimension of the work piece (3) and that the work piece (3) is positioned moveably in the centre of the hollow shaft (4).

14. A multifunctional device according to Claims 1 to 13, **characterized in that** the planetary gearing(s) is/are (a) toothed gear(s) and that the gear wheels are toothed wheels in the form of spur gears.

15. A multifunctional device, **characterized in that** two multifunctional devices according to Claim 1 used to machine the end section of work pieces (3) by turning on a lathe with a stationary work piece (3) and at least one revolving tool (2) are positioned to each other in such a way that the tool carriers (5) are located opposite one another with the work piece (3) in between.

16. A multifunctional device according to Claim 15, **characterized in that** the solid or hollow shafts (4) of the devices are linked to a drive (11).

## Revendications

1. Dispositif multifonctionnel pour usiner des zones d'extrémité de pièces (3) par tournage au moyen d'au moins un outil rotatif (2) et d'une pièce fixe (3), où un porte-outil en forme de cercle ou de couronne (5) est monté de manière détachable sur un arbre plein ou creux (4) pivotant et actionné qui, lui, est fixé sur un bâti (1), le porte-outil (5) étant muni d'au moins un chariot (6) qui est déplaçable transversalement au sens de rotation de l'arbre plein ou creux (4) et auquel est fixé un outil (2) détachable ou un capteur, ce dispositif étant doté d'au moins un arbre de transmission de chariot (12) pivotant qui est situé à l'intérieur de l'arbre plein ou creux (4) et qui est relié à l'arbre plein ou creux (4) au moyen d'au moins une boîte à engrenages planétaires, où le chariot (6) est relié, à l'aide d'un joint coulissant et d'au moins un engrenage conique / à vis sans fin ou un système vis-écrou (21), à l'arbre de transmission de chariot (12), la roue d'engrenage centrale de la boîte à engrenages planétaires étant relié à un entraînement (15) et où il est monté, par rapport à l'arbre plein ou creux (4), au moins un dispositif de serrage déplaçable pour y fixer la pièce (3), **caractérisé par le fait que** l'âme (16) de la boîte à engrenages planétaires située à l'intérieur de l'arbre plein ou creux (4) consiste en une première roue d'engrenage (16) qui est reliée, par l'intermédiaire d'une roue droite à dentures intérieure et extérieure (14), à l'arbre de transmission de chariot (12) situé à l'intérieur de l'arbre plein ou creux (4), et que la roue droite à dentures intérieure et extérieure (14) est montée sur l'arbre plein ou creux (4) de sorte qu'elle peut être déplacée et glissée en sens radial par rapport au périmètre de ce dernier.

2. Dispositif multifonctionnel suivant la revendication 1, **caractérisé par le fait que** les roues de la boîte à engrenages planétaires (17) se situent dans une deuxième roue d'engrenage (18) reliée à l'arbre plein ou creux (4) et que les axes de la roue centrale, de la deuxième roue d'engrenage (18) et de l'arbre plein ou creux (4) sont disposés de manière fixe et parallèlement l'un à l'autre.

3. Dispositif multifonctionnel suivant la revendication 2, **caractérisé par le fait que** la deuxième roue d'engrenage (18) est également le pignon menant de l'arbre plein ou creux (4).

4. Dispositif multifonctionnel suivant les revendications 1 et 2, **caractérisé par le fait que** la roue droite à dentures intérieure et extérieure (14) est positionnée, à l'aide d'au moins une bague glissante, par rapport à l'arbre plein ou creux (4).

5. Dispositif multifonctionnel suivant la revendication 1, **caractérisé par le fait que** le porte-outil (5) est équipé de deux, trois, cinq ou d'un nombre multiple de deux ou trois chariots (6), qu'il existe plusieurs arbres de transmission de chariot (12) dans l'arbre plein ou creux (4), que chaque arbre de transmission de chariot (12) est relié par une boîte à engrenages planétaires à l'arbre plein ou creux (4), que chaque âme (16) de la boîte à engrenages planétaires constitue une première roue d'engrenage (16) qui est respectivement reliée, par une roue droite à denture intérieure et à denture extérieure (14), à l'arbre de transmission du chariot (12) correspondant, que les roues droites à dentures intérieure et extérieure (14) sont disposées par rapport à l'arbre plein ou creux (4) et de telle sorte qu'elles peuvent être déplacées et glissées, et que chaque roue centrale de la boîte à engrenages planétaires est reliée à un entraînement (15).

6. Dispositif multifonctionnel suivant la revendication 1, **caractérisé par le fait que** le porte-outil (5) est équipé de deux, trois, cinq ou d'un nombre multiple de deux ou trois chariots (6), qu'il existe plusieurs arbres de transmission de chariot (12) dans l'arbre plein ou creux (4), que plusieurs arbres de transmission de chariot (12) sont reliés par une boîte à engrenages planétaires à l'arbre plein ou creux (4), que l'âme (16) de la boîte à engrenages planétaires constitue une première roue d'engrenage (16) qui est respectivement reliée, par une roue droite à denture intérieure et à denture extérieure (14), à l'arbre de transmission du chariot correspondant (12), que la roue droite à dentures intérieure et extérieure est disposée par rapport à l'arbre plein ou creux (4) et de telle sorte qu'elle peut être déplacée et glissée, et que la roue centrale de la boite à engrenages planétaires est reliée à un entraînement (15).

7. Dispositif multifonctionnel suivant la revendication 1, **caractérisé par le fait que** le porte-outil (5) est équipé de deux, trois, cinq ou d'un nombre multiple de deux ou trois chariots (6), qu'il existe plusieurs arbres de transmission de chariot (12) dans l'arbre plein ou creux (4), que plusieurs arbres de transmission de chariot (12) sont reliés par une première boîte à engrenages planétaires à l'arbre plein ou creux (4), que l'âme (16) de la première boîte à engrenages planétaires constitue une première roue d'engrenage (16) qui est reliée par une première roue droite à dentures intérieure et extérieure (14) à l'arbre de transmission de chariot (12), qu'au moins un arbre de transmission de chariot (12) est relié par une deuxième boîte à engrenages planétaires à l'arbre plein ou creux (4), que l'âme (16) de la deuxième boîte à engrenages planétaires est une autre première roue d'engrenage (16) qui est reliée par une deuxième roue droite à dentures intérieure et extérieure (14) à l'arbre de transmission de chariot (12), que les roues à dentures intérieure et extérieure (14) sont disposées par rapport à l'arbre plein ou creux (4) et de telle sorte qu'elles peuvent être déplacées et glissées, et que chaque roue centrale de la première et de la deuxième boîte à engrenages planétaires est reliée à un entraînement (15).

8. Dispositif multifonctionnel suivant la revendication 1, **caractérisé par le fait que** le raccord entre l'arbre de transmission de chariot (12) et l'engrenage conique / à vis sans fin ou le système vis-écrou (21) du porte-outil (5) est situé sur le front et en face des chariots (6), et que ce raccord est de fermeture géométrique et détachable.

9. Dispositif multifonctionnel suivant la revendication 1, **caractérisé par le fait que** le joint coulissant du chariot (6) est conçu en tant qu'engrenage hélicoïdal ou en tant que vis à billes.

10. Dispositif multifonctionnel suivant la revendication 1, **caractérisé par le fait que** le chariot (6) est doté d'au moins un outil (2) détachable.

11. Dispositif multifonctionnel suivant la revendication 10, **caractérisé par le fait qu'**un corps cylindrique ou cylindrique creux (24) est monté entre l'arbre plein ou creux (4) et la pièce (3), que les segments circulaires de la surface frontale du porte-outil (5) et du corps cylindrique ou cylindrique creux (24) sont respectivement disposés de forme écartée et en parallèle, que les surfaces opposées du corps cylindrique ou cylindrique creux (24) et/ou du porte-outil (5) sont dotées d'une rainure rotative, que chaque côté d'au moins une rainure est complètement fermée par au moins un joint torique à section circulaire (25), que ce joint torique à section circulaire (25) dépasse la zone où il est situé, au point que l'écart entre les segments circulaires des surfaces opposées est entièrement rempli par le joint torique à section circulaire (25), que la rainure est reliée, à l'aide d'au moins une première conduite de fluide de refroidissement intégrée dans le corps cylindrique ou cylindrique creux (24) et d'une pompe, à un réservoir de liquide de refroidissement, que, parallèlement au joint coulissant monté dans le porte-outil (5), une deuxième conduite de fluide de refroidissement (26) est disposée, la longueur de celle-ci pouvant être modifiée grâce à sa construction télescopique, que la première extrémité de cette deuxième conduite de fluide de refroidissement (26) et la rainure constituent une ouverture de bout en bout, que la deuxième extrémité de la deuxième conduite de fluide de refroidissement (26) est directement située sur l'outil (2), et que la deuxième extrémité de la deuxième conduite de fluide de refroidissement (26) se termine par l'extérieur.

12. Dispositif multifonctionnel suivant la revendication 1, **caractérisé par le fait que**, par rapport à l'arbre plein ou creux (4) et au porte-outil (5), le dispositif de serrage est disposé de telle sorte que les lignes axiales de l'arbre plein ou creux (4) et celles d'au moins de la zone d'extrémité de la pièce (3) se trouvent en même position.

13. Dispositif multifonctionnel suivant la revendication 1, **caractérisé par le fait que** le diamètre intérieur de l'arbre creux (4) et du porte-outil (5) est plus grand que la dimension maximale de la pièce (3) et que la pièce (3) peut être déplacée de manière axiale à l'intérieur de l'arbre creux (4).

14. Dispositif multifonctionnel suivant les revendications 1 à 13, **caractérisé par le fait que** la/les boîte/s à engrenages planétaires est/sont des transmissions par engrenages et que les roues d'engrenage constituent des roues dentées conçues en tant que roues droites.

15. Dispositif multifonctionnel, **caractérisé par le fait que** deux dispositifs multifonctionnels suivant la revendication 1, destinés à usiner les zones d'extrémité de pièces (3) par tournage au moyen d'au moins un outil rotatif (2) et d'une pièce fixe (3), sont positionnés de telle sorte que les porte-outil (5) se situent face à face et que la pièce (3) se trouve entre ceux-ci.

16. Dispositif multifonctionnel suivant la revendication 15, **caractérisé par le fait que** les arbres pleins ou creux (4) de ces dispositifs sont accouplés à un entraînement (11).
